# EUROPÄISCHE PATENTSCHRIFT

(11) **EP 0 516 769 B1**
(45) Veröffentlichungstag und Bekanntmachung des Hinweises auf die Patenterteilung: **19.07.1995**
(21) Anmeldenummer: 91918469.7
(22) Anmeldetag: 05.11.1991
(51) Int. Cl.: A23L 2/70

(54) **VERFAHREN ZUM SELEKTIVEN ENTFERNEN VON ZUCKER AUS GETRÄNKEN UND ANLAGE ZUR DURCHFÜHRUNG DES VERFAHRENS**
PROCESS AND SYSTEM FOR SELECTIVELY REMOVING SUGAR FROM BEVERAGES
PROCEDE ET INSTALLATION D'ELIMINATION SELECTIVE DU SUCRE CONTENU DANS DES BOISSONS

(30) Priorität: 21.12.1990 CH 4107/90
(43) Veröffentlichungstag der Anmeldung: 09.12.1992
(73) Patentinhaber: BUCHER-GUYER AG Maschinenfabrik, CH-8166 Niederweningen/Zürich (CH)
(72) Erfinder: GRESCH, Walter, CH-8166 Niederweningen (CH)
(86) Internationale Anmeldenummer: CH9100226
(87) Internationale Veröffentlichungsnummer: WO9210948

(56) Entgegenhaltungen:
- WO-A-82/02405
- WO-A-89/10703
- WO-A-90/14018
- WO-A-91/14497
- GB-A- 2 125 268

## Beschreibung

Die Erfindung betrifft ein Verfahren zum selektiven Entfernen von nichtflüchtigen Stoffen wie Zucker und/oder Säure und/oder Fehlgeschmack verursachenden Stoffen aus nichtalkoholischen oder alkoholischen Getränken oder zukkerhaltigen Lösungen mittels Membrantrennverfahren und weiteren Verfahren, wobei nach der Durchführung des Membrantrennverfahrens der abgetrennte Stoff bzw. die Uebergangskomponenten durch geeignete Verfahren entfernt und anschliessend die nach dem Entfernen übrig gebliebenen Stoffe mindestens teilweise wieder in das Membrantrennverfahren zurückgeführt werden.

Zum Entfernen von Stoffen aus Flüssigkeiten wird häufig die konventionelle Flüssig-Flüssig-Extraktion eingesetzt. Dieses bekannte Verfahren ist in erster Linie für den Stoffaustausch zwischen Zwei unter sich nicht mischbaren Flüssigkeiten geeignet. Dadurch wird die Anwendung dieses Verfahrens insbesondere in der Getränke-Industrie sehr stark eingeschränkt.

Durch die WO89/10703 ist ein Verfahren zur Entzuckerung von alkoholfreien Getränken bekannt. Dabei erfolgt die Abtrennung des Zuckers aus dem Rohsaft mit Hilfe bekannter Membrantrennverfahren wie Umkehrosmose oder Dialyse. Nach der Durchführung des Membrantrennverfahrens wird der abgetrennte Stoff mittels weiterer Verfahren entfernt oder umgewandelt. Die nach dem Entfernen oder Umwandeln übrig gebliebenen Stoffe werden wieder in den Prozess oder zum Endprodukt zurückgeführt.

Je nach Art der verwendeten Membrananlage für die Abtrennung der Uebergangskomponenten, z.B. Zucker, ist es bei diesem bekannten Verfahren möglich, dass die Uebergangskomponente, die aus der Ausgangsflüssigkeit zu entfernen ist, praktisch ohne Mittransport des Lösungsmittels, z.B. Wasser bei Fruchtsäften, von der Retentatseite auf die Permeatseite der Membrane übergeht. Dies gilt besonders für Dialyse-Anlagen. Aber auch bei der Anwendung von Ultrafiltration mit geringem Druck ist dies aufgrund der Rückdiffusion des Lösungsmittels von der Permeatseite zur Retentatseite möglich. Aufgrund dieses Effektes fehlt es vornehmlich bei gewissen dafür geeigneten Einrichtungen zum selektiven Entfernen der Uebergangskomponenten, z.B. Zucker aus dem Gesamtsystem an einem Transportmittel, um die Uebergangskomponente aus dem Bereich dieser Einrichtung herauszugewinnen. So lassen sich in der Verbindung mit Membrananlagen wie Dialyse oder Ultrafiltration mit geringem Druck nur solche Einrichtungen zum Entfernen der Uebergangskomponenten einsetzen, die mindestens über eine bestimmte Zeitperiode ebenfalls ohne Transportflüssigkeit bzw. Lösemittel das Entfernen der Uebergangskomponenten ermöglichen, wie dies z.B. bei Adsorptions- und Harz-Ausschluss-Verfahren der Fall ist. Letztere können aber aufgrund des Selektivitätspektrums nur in beschränktem Masse eingesetzt werden.

Nachteilig ist somit, dass der Einsatz von Membranverfahren, die für manche Fälle interessante Vorteile aufweisen, bei der bekannten Ausführung nicht kontinuierlich betrieben werden können, da zu diesem Zwecke dauernd Flüssigkeit aus dem Gesamtsystem entnommen werden müsste. Um ein qualitativ gleichmässiges Produkt (Raffinat oder Extrakt) zu erzielen, ist es von Interesse, kontinuierliche Verfahren als Einrichtung zum Entfernen der Uebergangskomponenten zusammen mit einer kontinuierlichen Membrantrennanlage einzusetzen.

Der Erfindung liegt die Aufgabe zugrunde, die genannten Nachteile zu vermeiden und das Verfahren und die Anlage der eingangs erwähnten Art zu verbessern und zu verfeinern.

Gemäss der Erfindung wird diese Aufgabe dadurch gelöst, dass mindestens in einem der weiteren Verfahren zur Abtrennung von Uebergangskomponenten diese mittels einer Waschflüssigkeit durch Auswaschen zu einem Extrakt entfernt werden.

Vorteilhafte Ausgestaltungen und Weiterbildungen der Erfindung sind den weiteren Patentansprüchen zu entnehmen.

Die Erfindung ist in der folgenden Beschreibung und der schematischen Zeichnung, die ein Ausführungsbeispiel einer Anlage zur Durchführung des Verfahrens darstellt, näher erläutert.

Die Ausgangsflüssigkeit bzw. der Rohsaft, dem z.B. der Zucker entzogen werden soll, wird über eine Leitung 1 einer Membrantrennanlage 2 zugeführt. Die Membrantrennanlage 2 besteht vorzugsweise aus einer ein- oder mehrstufigen Dialyse- oder anderen Membran-Anlage, bei der der Permeat-Fluss im Gegenstrom zum Retentat-Fluss innerhalb der einzelnen Module aber auch zwischen den Stufen bei einer mehrstufigen Anlage fliesst. Die Anlage ist entsprechend mit Modulen ausgerüstet, die einen Permeatkreislauf 3 im Gegenstrom zum Retentatstrom ermöglichen.

Die in der Praxis zur Erhöhung der Leistung üblichen Kreisläufe für Retentat- und Permeatströme sind hier der einfachheithalber weggelassen.

Der bevorzugte Trennbereich für eine Entzuckerung der Membranen der Membrantrennanlage 2 liegt im Grenzbereich zwischen Umkehrosmose und Ultrafiltration, deren maximale Trenngrenze 1000 Dalton beträgt. In diesem Bereich werden Farbstoffe noch zurückgehalten, während die Uebergangskomponenten, hier Zucker, durch die Membran 4 hindurchtreten und in den Permeatstrom 3 gelangen. Ferner passieren makromolekulare Stoffe, z.B. Extraktstoffe, Polyphenole etc. die Membran 4 der Membrantrennanlage 2 in stark verringertem Masse. Es lassen sich aber bei geringerer Selektivität auch z.B normale Cuprophan-Dialyse-Membranen mit einer Trenngrenze von ca. 10'000 einsetzen. Solche Membranen sind aufgrund des grösseren Marktes, besonders kostengünstig. Je nach Anwendung sind auch Membranen mit anderen Trenngrenzen einzusetzen.

Der Permeatkreisstrom 3 fliesst in eine Einrichtung 5 zur selektiven Stoff-Entfernung. Über eine Leitung 6 werden die zu entfernenden Stoffe wie z.B. Zucker, Säure, Fehlgeschmack, Alkohol aus Zucker, Salze aus Zucker oder Säure etc. abgeführt. Das Permeat 3 wird zumindest teilweise nach der Stoffentfernung in der Einrichtung 5 über eine Leitung 8 wieder in das Retentat nach der Membrantrennanlage 2 zurückgeführt, wo es vorzugsweise im Gegenstrom zu dessen Retentatstrom geführt wird. Das von den unerwünschten Stoffen befreite Getränk verlässt als Retentat bzw. Raffinat, z.B. zuckerreduzierter Fruchtsaft, über eine Leitung 7 die Membrantrennanlage 2.

Die Einrichtung 5 zur selektiven Stoff-Entfernung besteht im Ausführungsbeispiel aus einer Nanofiltration 9, in deren Retentat-Umwälzkreislauf 10 das Permeat der Membrantrennanlage 2, das die Uebergangskomponenten enthält, über die Leitung 3 eingebracht wird. Dem Retentat-Umwälzkreislauf 10 der Nanofiltration 9 wird ferner über eine Leitung 11 eine Waschflüssigkeit zugeführt, mit deren Hilfe die Ueberganskomponente, z.B. Zucker, aus dem Retentat der Nanofiltration 9 als Extrakt ausgewaschen wird. Der Extrakt besteht z.B. dann aus einer mit Zucker angereicherten Lösung, die über die Leitung 6 abgeführt wird. Zur üblichen Umwälzung des Retentats ist im Retentat-Umwälzkreislauf 10 eine Umwälzpume 12 angeordnet. Das Permeat der Nanofiltration 9 wird über die Leitung 8 zur Permeatseite der Membrantrennanlage 2 wieder zurückgeführt.

Das erfindungsgemässe Auswaschen der Uebergangskomponenten zu einem Extrakt ermöglicht vor allem den Einsatz von Membranverfahren in der Einrichtung 5 zum Entfernen des unerwünschten oder zu gewinnenden Stoffes. Dabei lassen sich die allgemeinen Vorteile von Membranverfahren nutzen, insbesondere die rasche Betriebsbereitschaft, geringer Energieverbrauch und eine physikalische Trennung, die z.B. für Fruchtsäfte aus gesetzlichen Gründen sehr wichtig ist. Durch den Einsatz von Membranverfahren, z.B. das bekannte Dialyse-Verfahren, ist ein Stoffaustausch zwischen zwei ineinander löslichen Flüssigkeiten möglich. Ferner besteht die Möglichkeit, die Anlage kalt zu fahren. Dadurch können nachteilige Wärmebelastungen bei der Verarbeitung von Getränken vermieden werden.

Anstelle der Nanofiltration 9 können auch andere Membranverfahren, z.B. Umkehr-Osmose, für die Stoff-Entfernung in der Einrichtung 5 angewendet werden. Bei der Kopplung einer Nanofiltration mit Dialyse resp. Ultrafiltration, mit einer Trenngrenze der Membrane bis zu 10'000 D, gefahren mit einem geringen Druck von z.B. max. 2 bar, ergeben sich dadurch interessante Trennmöglichkeiten. So ist z.B. eine bevorzugte Abtrennung von Molekülen im Molekulargewichts-Bereich von z.B. 150 - 350 (z.B. Zucker) aus einer Ausgangsflüssigkeit möglich, die Moleküle mit einem Molekulargewicht bis über 20'000 (z.B. Fruchtsäfte) enthält.

Für das Auswaschen der Uebergangskomponenten im Retentat-Umwälzkreislauf 10 der Nanofiltration 9 kann z.B. Wasser als Waschflüssigkeit eingesetzt werden. Mit Rücksicht auf die Selektivität für das gesamte Trennverfahren wird aber vorzugsweise die Ausgangsflüssigkeit oder eine ähnliche Flüssigkeit verwendet. Als eine der Ausgangsflüssigkeit ähnliche Flüssigkeit kommt bspw. eine mehr oder weniger z.B. mit Wasser verdünnte Ausgangsflüssigkeit in Betracht. Es kann auch eine Flüssigkeit verwendet werden, die in einem bestimmten Molekularbereich eine ähnliche Zusammensetzung hat wie die Ausgangsflüssigkeit, aber z.B. billiger ist. Dies könnten bspw. andere Fruchtsäfte oder minderwertige Fruchtsäfte sein. Um das gesamte Verfahren etwas selektiver hinsichtlich Rückhalt von bestimmten Stoffen im Retentat der Membrananlage 2 zu machen, kann auch eine Waschflüssigkeit gewählt werden, welche diese Stoffe gegenüber der Ausgangsflüssigkeit vermehrt enthält, resp. es können solche Stoffe der Waschflüssigkeit zugefügt werden. Interessante Anwendungen dafür sind z.B.: Verhindern, dass zuviel Komponenten mit ähnlichem Molekulargewicht, wie dasjenige der zu entfernenden Komponenten entfernt werden (z.B. Citronensäure, Ascorbinsäure bei der Entzuckerung) oder dass im Vergleich zur Glukose und Sacharose zuviel Fruktose, da Gehalt höher, aus dem zu entzuckernden Fruchtsaft entfernt wird.

Zur Durchführung des Auswaschens von Uebergangskomponenten lassen sich grundsätzlich alle bekannten Verfahren einsetzen. Für den Fall, dass es sich dabei um Membranverfahren handelt, können die vorhandenen Kreisläufe, wie z.B. der Retentat-Umwälzkreislauf 10 der Nanofiltration 9 gemäss dem Ausführungsbeispiel, verwendet werden. Bei der Entzuckerung beträgt der Bx-Gehalt im Retentat-Kreislauf vorzugsweise ca. 15-40° Bx. Die Waschflüssigkeit hat z.B. 5,5° Bx, was infolge der Verdünnung mit Wasser ungefähr der Hälfte der Ausgangsflüssigkeit entspricht. Die Waschflüssigkeitszufuhr beträgt einen Bruchteil der Umwälmenge der Nanofiltration 9. Ferner entspricht die Waschflüssigkeitszufuhr vorzugsweise etwa der abgezogenen Extraktmenge einschliesslich der Uebergangskomponentenmenge. Aufgrund dessen ist der Gehalt an Uebergangskomponenten im Retentat-Umwälzkreislauf 10 der Nanofiltration 9 ungefähr gleich hoch wie derjenige im Extrakt und entspricht z.B. je nach Trenngrenze der Nanofiltration 9 der 1,5 bis 3-fachen Konzentration gegenüber der Ausgangsflüssigkeit. Dadurch resultiert eine sehr wirksme Entfernung von Uebergangskomponenten aus dem Membranverfahren der Einrichtung 5. Es hat sich auch gezeigt, dass die Selektivität nur geringfügig leidet, wenn als Waschflüssigkeit eine auf bspw. 50 % verdünnte Ausgangsflüssigkeit verwendet wird. In der Anlage zur Durchführung des Verfahrens lässt sich die Bedingung, dass die Waschflüssigkeit etwa gleich der Extraktmenge plus Uebergangskomponentenmenge ist, sehr einfach durch ein nicht dargestelltes, niveaukontrolliertes Ausgleichsgefäss, das mit dem Retentat-Umwälzkreislauf 10 der Nanofiltration 9 verbunden ist, automatisieren.

Das gesamte Flüssig-Flüssig-Extrationsverfahren gemäss der Erfindung wird vorzugsweise kontinuierlich betrieben, um eine gleichmässige Qualität der zu gewinnenden Produkte zu erzielen. Dabei kommt als Produkt sowohl das Raffinat als auch das Extrakt oder, je nach Anwendung, beide zusammen in Betracht.

Das erfindungsgemässe Verfahren lässt sich auch zur Gewinnung oder Entfernung von Geschmacksstoffen, pharmazeutischen Wirkstoffen, Schadstoffen etc. aus Säften von pflanzlichen Produkten einsetzen.

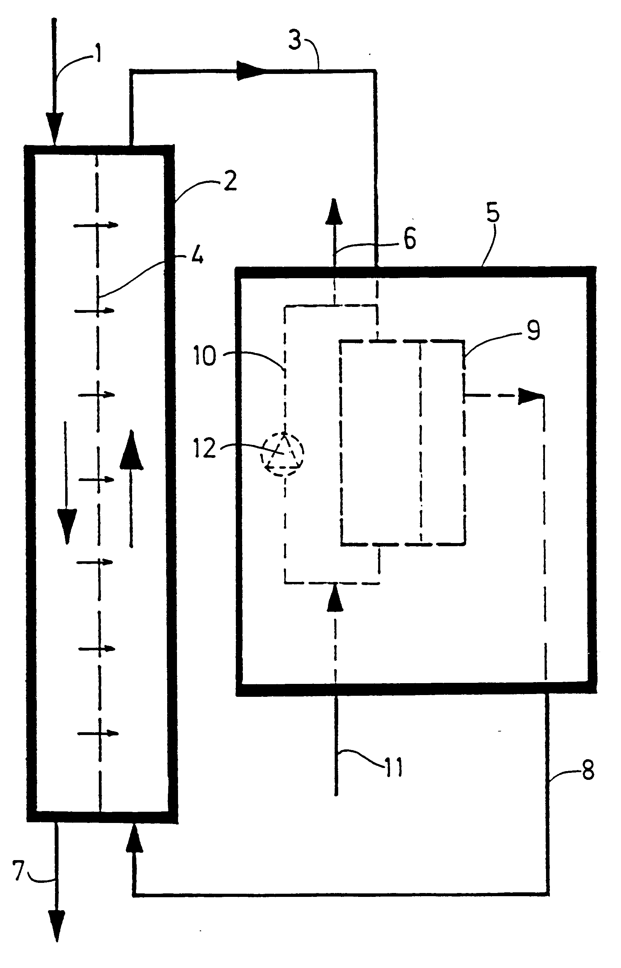

## Patentansprüche

1. Verfahren zum selektiven Entfernen von nichtflüchtigen Stoffen wie Zucker und/oder Säure und/oder Fehlgeschmack verursachenden Stoffen aus nichtalkoholischen oder alkoholischen Getränken oder zuckerhaltigen Lösungen mittels Membrantrennverfahren und weiteren Verfahren, wobei nach der Durchführung des Membrantrennverfahrens der abgetrennte Stoff bzw. die Uebergangskomponenten durch geeignete Verfahren entfernt und anschliessend die nach dem Entfernen übrig gebliebenen Stoffe mindestens teilweise wieder in das Membrantrennverfahren zurückgeführt werden, dadurch gekennzeichnet, dass mindestens in einem der weiteren Verfahren zum Abtrennen der Uebergangskomponenten diese mittels einer Waschflüssigkeit durch Auswaschen zu einem Extrakt entfernt werden.

2. Verfahren nach Anspruch 1, dadurch gekennzeichnet, dass zur Entfernung der Uebergangskomponenten Membranverfahren als weitere Trennverfahren eingesetzt werden.

3. Verfahren nach Anspruch 2, dadurch gekennzeichnet, dass eine Nanofiltration (9) oder Umkehr-Osmose eingesetzt wird.

4. Verfahren nach Anspruch 3, dadurch gekennzeichnet, dass bei Kopplung mit Dialyse und/oder Ultrafiltration mit geringem Druck gefahren wird.

5. Verfahren nach Anspruch 4, dadurch gekennzeichnet, dass der Druck maximal 2 bar beträgt.

6. Verfahren nach einem der Ansprüche 1 bis 5, dadurch gekennzeichnet, dass als Waschflüssigkeit vorzugsweise eine gleiche Flüssigkeit wie die Ausgangsflüssigkeit verwendet wird.

7. Verfahren nach einem der Ansprüche 1 bis 6, dadurch gekennzeichnet, dass als Waschflüssigkeit eine der Ausgangsflüssigkeit ähnliche Flüssigkeit verwendet wird.

8. Verfahren nach einem der Ansprüche 1 bis 7, dadurch gekennzeichnet, dass als Waschflüssigkeit eine mehr oder weniger, z.B. mit Wasser verdünnte Ausgangsflüssigkeit verwendet wird.

9. Verfahren nach einem der Ansprüche 1 bis 8, dadurch gekennzeichnet, dass als Waschflüssigkeit eine Flüssigkeit verwendet wird, die in einem bestimmten Molekularbereich eine ähnliche Zusammensetzung hat wie die Ausgangsflüssigkeit.

10. Verfahren nach Anspruch 9, dadurch gekennzeichnet, dass als Waschflüssigkeit andere Fruchtsäfte oder minderwertige Fruchtsäfte verwendet werden.

11. Verfahren nach einem der Ansprüche 1 bis 10, dadurch gekennzeichnet, dass der Waschflüssigkeit noch Stoffe hinzugefügt werden, welche in der Membrananlage (2) bspw. im Retentat zurückgehalten werden, resp. dass solche Flüssigkeiten als Waschflüssigkeit verwendet werden, welche solche Stoffe in höherer Konzentration enthalten.

12. Verfahren nach einem der Ansprüche 1 bis 11, dadurch gekennzeichnet, dass zur Durchführung des Waschvorganges die vorhandenen Kreisläufe der weiteren Membranverfahren, die zur Entfernung der Übergangskomponenten dienen, verwendet werden.

13. Verfahren nach Anspruch 12, dadurch gekennzeichnet, dass zur Durchführung des Waschvorganges der Retentat-Umwälzkreislauf (10) der vorhandenen Nanofiltration (9) verwendet wird.

14. Verfahren nach Anspruch 13, dadurch gekennzeichnet, dass der Bx-Gehalt im Retentat-Umwälzkreislauf (10) 15-40° Bx beträgt.

15. Verfahren nach einem der Ansprüche 1 bis 14, dadurch gekennzeichnet, dass die Waschflüssigkeitszufuhr vorzugsweise der abgezogenen Extraktmenge plus Ueberganskomponentenmenge entspricht.

16. Verfahren nach einem der Ansprüche 1 bis 15, dadurch gekennzeichnet, dass das gesamte Flüssig-Flüssig-Extraktionsverfahren vorzugsweise kontinuierlich betrieben wird.

## Claims

1. Process for selectively removing non-volatile, substances, such as sugar and/or acid and/or substances producing an off-taste from alcoholic or non-alcoholic beverages or sugar-containing solutions by means of membrane separation processes and further processes, in which, once the membrane separation process has been carried out, the substance separated or the transition components are removed by suitable processes and then the substances still remaining after this removal are at least partially returned to the membrane separation process, characterised in that, at least in one of the further processes for separating the transition components, the latter are removed as an extract by washing out by means of a washing liquid.

2. Process according to claim 1, characterised in that membrane separation processes are used as further separation processes for removing the transition components.

3. Process according to claim 2, characterised in that nanofiltration (9) or reverse osmosis is used.

4. Process according to claim 3, characterised in that low pressure is used when coupling with dialysis and/or ultrafiltration.

5. Process according to claim 4, characterised in that the pressure is a maximum of 2 bar.

6. Process according to one of claims 1 to 5, characterised in that a liquid identical to the starting liquid is preferably used as the washing liquid.

7. Process according to one of claims 1 to 6, characterised in that a liquid similar to the starting liquid is used as the washing liquid.

8. Process according to one of claims 1 to 7, characterised in that a starting liquid diluted to a greater or lesser extent, e.g. with water, is used as the washing liquid.

9. Process according to one of claims 1 to 8, characterised in that a liquid having a similar composition to the starting liquid in a specific molecular range is used as the washing liquid.

10. Process according to claim 9, characterised in that other fruit juices or fruit juices of inferior quality are used as the washing liquid.

11. Process according to one of claims 1 to 10, characterised in that other substances rejected in the membrane separator (2) or in the retentate are added to the washing liquid or that those liquids containing substances of this kind in a higher concentration are used as the washing liquid.

12. Process according to one of claims 1 to 11, characterised in that the circuits of the further membrane processes serving to remove the transition components are used to carry out the washing process.

13. Process according to claim 12, characterised in that the retentate circuit (10) of the nanofiltration process (9) is used to carry out the washing process.

14. Process according to claim 13, characterised in that the Bx content in the retentate circuit (10) is 15-40° Bx.

15. Process according to one of claims 1 to 14, characterised in that the quantity of washing liquid supplied preferably corresponds to the quantity of extract removed plus the quantity of transition components.

16. Process according to one of claims 1 to 15, characterized in that the entire liquid-liquid extraction process is preferably carried out continuously.

## Revendications

1. Procédé d'élimination sélective, au moyen d'un processus de séparation à membrane et de processus supplémentaires, de substances non volatiles telles que du sucre et/ou des acides et/ou des substances produisant un goût parasite qui sont contenues dans des boissons alcoolisées ou sans alcool ou dans des solutions sucrées, la substance séparée ou les composants de transition étant, à la suite de l'exécution du processus de séparation à membrane, éliminés par des processus appropriés, et les substances résiduelles à la suite de cette élimination étant au moins pour partie ramenées au processus de séparation à membrane, **caractérisé** en ce que, dans au moins un des processus supplémentaires pour la séparation des composants de transition, ces derniers sont éliminés sous la forme d'un extrait obtenu par épuisement par lavage au moyen d'un liquide de lavage.

2. Procédé selon la revendication 1, **caractérisé** en ce qu'on utilise des processus à membrane comme processus de séparation supplémentaires pour l'élimination des composants de transition.

3. Procédé selon la revendication 2, **caractérisé** en ce qu'on utilise une nanofiltration (9) ou une osmose inverse.

4. Procédé selon la revendication 3, **caractérisé** en ce qu'en cas de couplage avec une dialyse et/ou une ultrafiltration, on opère avec une pression faible.

5. Procédé selon la revendication 4, **caractérisé** en ce que la pression est au maximum de 2 bars.

6. Procédé selon l'une des revendications 1 à 5, **caractérisé** en ce qu'on utilise de préférence comme liquide de lavage un liquide identique au liquide de départ.

7. Procédé selon l'une des revendications 1 à 6, **caractérisé** en ce qu'on utilise comme liquide de lavage un liquide similaire au liquide de départ.

8. Procédé selon l'une des revendications 1 à 7, **caractérisé** en ce qu'on utilise comme liquide de lavage un liquide de départ plus ou moins dilué, par exemple avec de l'eau.

9. Procédé selon l'une des revendications 1 à 8, **caractérisé** en ce qu'on utilise comme liquide de lavage un liquide qui, dans une plage moléculaire déterminée, possède une composition similaire à celle du liquide de départ.

10. Procédé selon la revendication 9, **caractérisé** en ce qu'on utilise comme liquide de lavage d'autres jus de fruits ou des jus de fruits de qualité inférieure.

11. Procédé selon l'une des revendications 1 à 10, **caractérisé** en ce qu'on ajoute au liquide de lavage des substances qui sont retenues dans l'installation à membrane (2), par exemple dans le rétentat, ou bien en ce qu'on utilise comme liquide de lavage des liquides qui contiennent de telles substances dans une plus grande concentration.

12. Procédé selon l'une des revendications 1 à 11, **caractérisé** en ce qu'on utilise pour l'exécution de l'opération de lavage les circuits existants des processus supplémentaires à membrane qui servent à l'élimination des composants de transition.

13. Procédé selon la revendication 12, **caractérisé** en ce qu'on utilise pour l'exécution de l'opération de lavage le circuit de circulation de rétentat (10) de l'installation existante de nanofiltration (9).

14. Procédé selon la revendication 13, **caractérisé** en ce que la teneur Bx dans le circuit de circulation de rétentat (10) est de 15 à 40° Bx.

15. Procédé selon l'une des revendications 1 à 14, **caractérisé** en ce que l'apport de liquide de lavage correspond de préférence à la quantité enlevée d'extrait plus la quantité de composants de transition.

16. Procédé selon l'une des revendications 1 à 15, **caractérisé** en ce que l'ensemble du processus d'extraction liquide-liquide est de préférence exploité en continu.
